# EUROPEAN PATENT APPLICATION

(11) **EP 1 574 938 A2**
(43) Date of publication of application: **14.09.2005**
(21) Application number: 05101478.5
(22) Date of filing: 25.02.2005
(51) Int. Cl.: G06F 3/033, H01H 19/00

(54) **A switch assembly**

(30) Priority: 10.03.2004 KR 2004016023
(71) Applicant: SAMSUNG ELECTRONICS CO., LTD., Gyeonggi-Do 442-742 (KR)
(72) Inventor: Ahn, Kyoung-jin, Yeongtong-gu,Suwon-si Gyeonggi-do (KR)
(74) Representative: Geary, Stuart Lloyd

(57) **Abstract**

Disclosed is a scroll key integrally formed with a function selecting switch that selects one of at least two functions. The scroll key comprises a circuit board having a circuit provided for a predetermined function, a vertical rotation switch mounted on the circuit board with a rotation axis thereof being substantially parallel with the circuit board, first and second tact switches mounted on the circuit board in alignment with the rotation axis of the vertical rotation switch, a rotation knob rotating between the vertical rotation switch and the first tact switch in substantially perpendicular relation to the circuit board to rotate the vertical rotation switch and press the first tact switch, and a button mounted on the circuit board to press the second tact switch. Accordingly, a small-sized scroll key can be implemented and assembling of the scroll key is improved.

## Description

The present invention relates to a dial type switch assembly comprising wheel means, having shaft means, and a switch.

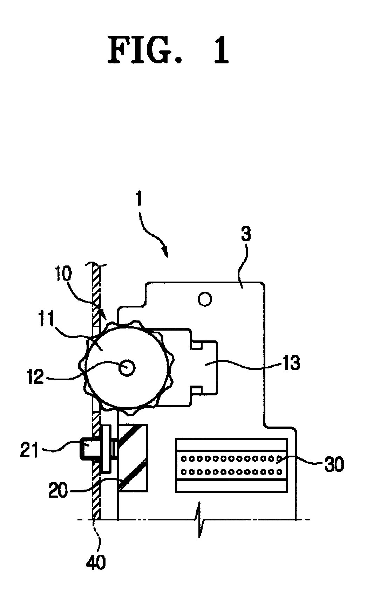

Many portable electronic devices, such as camcorders, comprise a scroll key which perform both a scroll function and an enter function. The scroll function moves a cursor on a display screen so that one of the various displayed functions can be selected and the enter function confirms the selection. A function selecting switch can also be adapted to select one of two predetermined functions. Figure 1 shows an known switch assembly having the scroll key and the function selecting switch.

Referring to Figure 1, a known switch assembly 1 having the scroll key comprises a circuit board 3 on which a circuit is formed, a scroll key switch 10 having both the scroll function and the enter function, a tact switch 20, which selects the highlighted function, and a button 21 for operating the tact switch 20.

The scroll key switch 10 comprises a rotation knob 11 rotating about an axis 12 which can be pressed a certain distance towards the axis 12, and a body part 13 which supports the rotation knob 11 during rotation. When the rotation knob 11 rotates, the scroll function is performed. The body part 13 performs the enter function when the rotation knob 11 is pressed towards the axis 12. The scroll key switch 10 is mounted on the circuit board 3 in such a manner that the rotation axis 12 is perpendicular to the circuit board 3. Thus, the rotation knob 11 rotates parallel with the circuit board 3.

The tact switch 20 is fixed onto the circuit board 3, and is typically located below the scroll key switch 10. The button 21 is used to operate the tact switch 20, and is fixed separately to a casing 40 where the switch assembly 1 is mounted. The button 21 is located such that one end of the button 21 can press the tact switch 20. A connector 30 is used to connect the switch assembly 1 to a controller (not shown) of the portable electronic device.

Operation of the above-structured switch assembly having the scroll key will be described hereinbelow.

For the purpose of this discussion, the switch assembly 1 having the scroll key is assumed to be used as the focusing button and a menu selection button. The manual focusing button manually controls the focus of a lens in the camcorder, and the menu selection key selects the function from the menu displayed on the display panel.

When a user wants to manually control the focus of the camcorder lens, the user presses button 21. The controller interprets the scroll key switch 10 as being the manual focusing key, the user then focuses the lens by rotating the rotation knob 11 clockwise or anti-clockwise (by moving the outside of the knob 11 up or down).

If the user wants to select a specific function from the menu displayed on the display panel, the user presses button 21. The controller interprets the scroll key switch 10 now as being the menu selection key for moving the cursor. By rotating the rotation knob 11 of the scroll key switch 10, the cursor is moved from one menu to another menu. The direction in which the cursor moves is determined by the rotation direction of the rotation knob 11. After placing the cursor on a desired menu by rotating the rotation knob 11, if the user presses the rotation knob 11, the enter function is performed to confirm selection of the desired menu. The button 21 is used for selecting the desired function of the rotation knob 11, and the scroll button 10 is used for performing the scroll function with to select the desired function.

In the known switch assembly 1, however, the rotation knob 11 of the scroll key switch 10 is mounted parallel with the circuit board 3 (i.e. perpendicularly with the axis of rotation of the knob 11). The button 21 for operating the tact switch 20 is mounted separately. Therefore, it is difficult to make the portable electronic device smaller. Furthermore, separately mounting button 21 for the tact switch 20 is not space-effective, making assembly of the known switch assembly more difficult.

An object of the present invention is to address at least the above problems and/or disadvantages and to provide at least the advantages described below. Accordingly, an object of the present invention is to provide a scroll key having a function selecting switch, which is made smaller by integrating a rotation knob and a tact switch. In particular, the rotation knob is mounted such that it rotates perpendicularly to the circuit board and the tact switch is in alignment with the rotation knob to select functions.

Another object of the present invention is to provide a scroll key having a function selecting switch, which is space-effective as a portable electronic device and easy to assemble.

The present invention relates to a dial type switch assembly comprising wheel means, having shaft means, and a switch.

A dial type switch assembly according to the present invention is characterised in that said switch is located behind one end of the shaft means, and said shaft means is deflectable so as to operate the switch when the user presses the wheel means diametrically.

Additional optional and preferred features are set forth in claims 2 and 3 appended hereto.

An embodiment of the present invention will now be described, by way of example only, and with reference to Figures 2 to 6, in which;
Figure 1 shows a known switch assembly in which a scroll key comprises a function selecting switch;
Figure 2 is a perspective view of a scroll key having a function selecting switch according to an embodiment of the present invention;
Figure 3 is an exploded perspective view of the scroll key having the function selecting switch of Figure 2;
Figure 4 is a view of a rotation knob of the scroll key having the function selecting switch of Figure 2;
Figure 5 is a perspective view of a scroll key having a function selecting switch according to another embodiment of the present invention; and
Figure 6 is a partial perspective view showing the scroll key of Figure 5 having the function selecting switch being mounted in a portable electronic device.

In the drawings, the same or similar elements are denoted by the same reference numerals. In the following description, a detailed description of known functions and configurations have been omitted for conciseness and clarity.

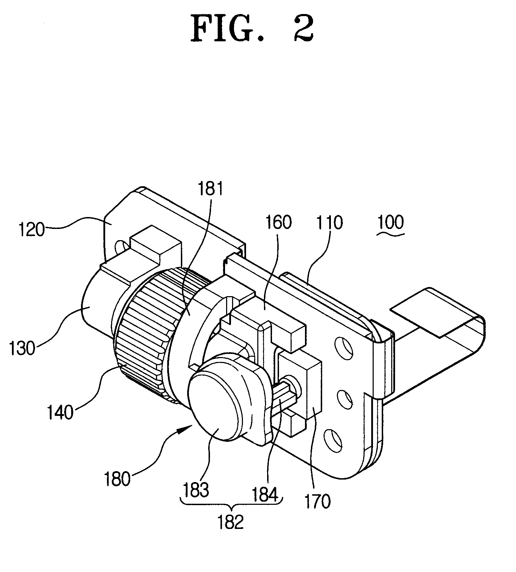

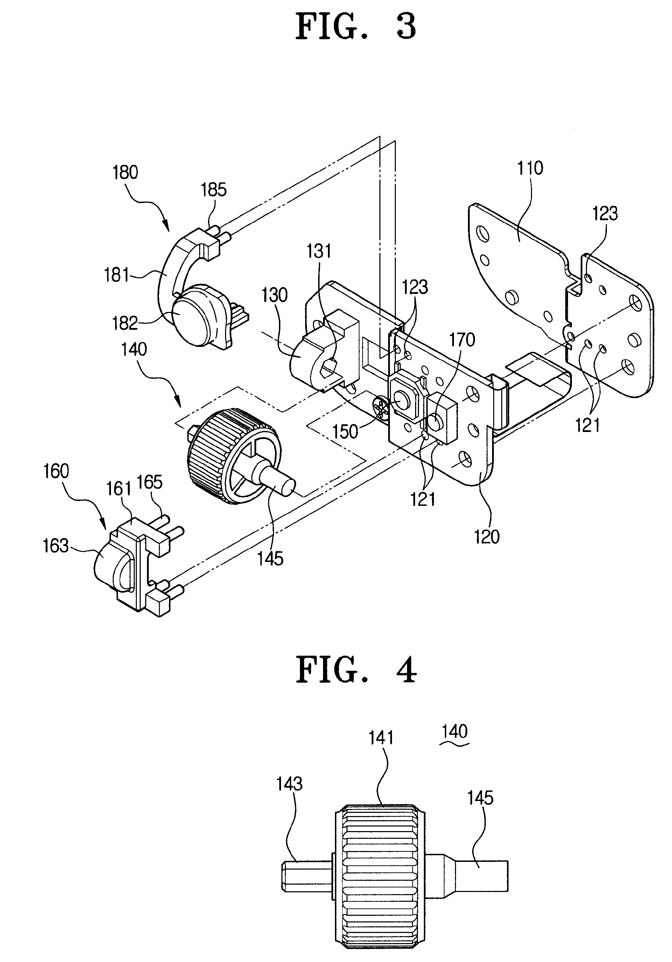

Referring to Figures 2 and 3, the scroll key 100 comprises a base board 110, a flexible printed circuit (FPC) 120, a vertical rotation switch 130, a rotation knob 140 for rotating the vertical rotation switch 130, a first tact switch 150 pressed by the rotation knob 140, a holder 160 which supports the rotation knob 140 during rotation, a second tact switch 170 for selecting functions, and a button 180 for pressing the second tact switch 170.

The base board 110 serves as a body for the scroll key 100 having a function selecting switch. The base board 110 is made of a sturdy material and comprises a fixing hole for connection to a device, such as a portable electronic device.

The FPC 120 is a special-function circuit formed on a flexible material. The FPC 120 is located on the base board 110. On the FPC 120, the vertical rotation switch 130, the first tact switch 150 and the second tact switch 170 are connected in line.

The vertical rotation switch 130 for scrolling is attached on the FPC 120 so that the rotation axis is substantially parallel with the surface of the FPC 120. The vertical rotation switch 130 includes a hole 131, preferably a hexagonal hole, in the centre for connection with the rotation knob 140. The vertical rotation switch 130 has the same structure as other scrolling switches, as one skilled in the art will appreciate, and therefore a detailed description thereof is omitted.

The rotation knob 140, as shown in Figure 4, comprises a knob body 141, and first and second rotation shafts 143 and 145 that protrude on the both sides of the knob body 141. The first shaft 143 protruding from one side of the rotation knob 140 is shaped so as to fit in the hole 131. Preferably the hole 131 is hexagonal in shape, and the shaft 143 has a corresponding hexagonal cross-section to engage the hole 131. Thus, when the first shaft rotates, the vertical switch 130 also rotates. The second shaft 145 on the other side of the rotation knob 140 has a circular cross-section so that the knob body 141 is supported by the holder 160 during rotation.

The first tact switch 150 is mounted on the FPC 120 under the shaft 145 of the rotation knob 140. Thus, as the rotation knob 140 is pressed, the first tact switch 150 is pressed. The holder 160 supports not only the rotation of the second shaft 145 above the first tact switch 150 but also vertical movement of the shaft 145 as the knob body 141 of the rotation knob 140 is pressed. A fixing projection 165 is formed at a lower portion of the holder 160. As shown in Figure 3, the holder 160 comprises a leg part 161 to be mounted on the FPC 120, a guide part 163 supporting the rotation and the vertical movement of the rotation knob 140. The FPC 120 and the base board 110 respectively have fixing holes 121 corresponding to the fixing projection 165. By passing the fixing projection 165 of the holder 160 through the fixing hole 121 and melting the fixing projection 165, the holder 160 and the FPC 120 are fixed together on the base board 110.

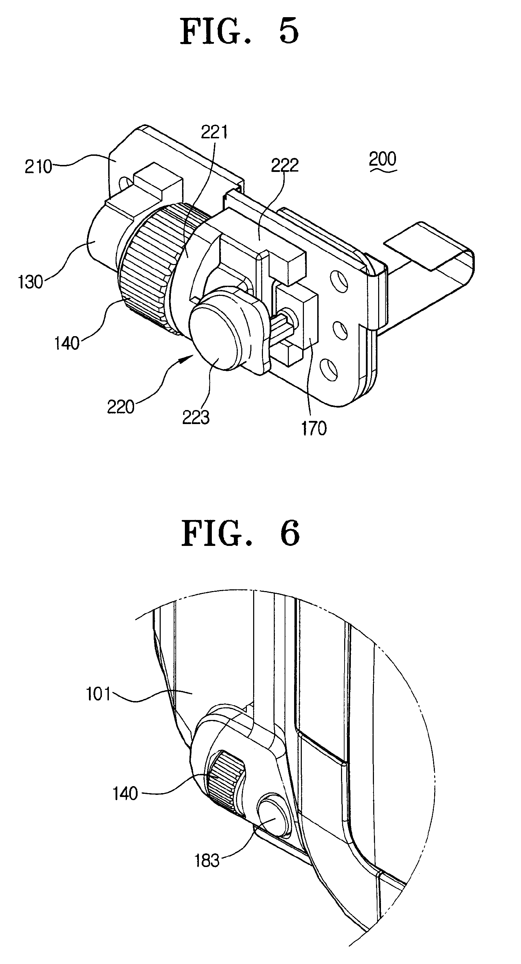

The second tact switch 170 is aligned with the rotation knob 140 and the first tact switch 150, on the FPC 120. The second tact switch 170 is pressed by the button 180 fixed to the base board 110. The button 180 comprises a button fixing part 181 to be fixed to the base board 110 and a button press part 182 extending from the top of the button fixing part 181 to press the second tact switch 170. The button fixing part 181 is located between the rotation knob 140 and the leg part 161 of the holder 160 to minimize the size of the scroll key 100. The button press part 182 comprises a touch surface 183 protruding out of a casing 101 (as shown in Figure 6) for a user to press, and a pressing projection 184 (shown in Figure 2) for pressing the second tact switch 170 as the touch surface 183 is pressed. A button fixing projection 185 is formed at a bottom of the button fixing part 181, and a fixing hole 123 is formed on both the FPC 120 and the base board 110 which both correspond to the button fixing projection 185. By passing the button fixing projection 185 through the fixing hole 123 formed on both the FPC 120 and the base board 110 and melting the button fixing projection 185, the button 180 and the FPC 120 are both fixed to the base board 110.

According to an embodiment of the present invention as structured above, the scroll key 100 that has a function selecting switch can be easily mounted in portable electronic devices by mounting only the base board 110. The scroll key 100 can be easily mounted because the rotation switch 130, the first and the second tact switches 150 and 170, and the button 180 for operating the second tact switch 170 are integrally formed on the base board 110.

Referring now to FIG. 6, operation of the scroll key having a function selecting switch according to an embodiment of the present invention will now be described. When the touch surface 183 of the button 180, that is exposed out of the casing 101 of the portable electronic device is pressed, the pressing projection 184 (FIG. 2) moves down, thereby pressing the second tact switch 170. The second tact switch 170, being pressed, transmits a predetermined signal to the controller (not shown). The rotation knob 140 can smoothly rotate due to its first and second shafts 143,145 that are respectively supported by the vertical rotation switch 130 and the holder 160. Also, since the rotation knob 140 is supported at both sides, the size of the knob body 141 of the rotation knob 140 can be selected according to the user's convenience and the size of the device. When the user presses the rotation knob 140, the second shaft 145 that is disposed above the first tact switch 150 moves down, thereby pressing the first tact switch 150. Accordingly, the controller perceives that the enter function has been performed.

Operation of the scroll key 100 having a function selecting switch, as described above and as mounted in a camcorder used for manual focusing as well as a menu selection key, will be described hereinbelow. When the user wants to manually focus the camcorder, the user presses the touch surface 183 of the button 180 that is exposed from the camcorder casing 101, as shown in Figure 6. Then, the controller interprets the vertical rotation switch 130 as being the manual focusing key which focuses the camcorder. Therefore, by rotating the rotation knob 140 the user focuses the camcorder.

If the user wants to select a specific menu from the displayed menu screen, the user presses the touch surface 183 of the button 180 again. This time, the controller interprets the vertical rotation switch 130 to be the menu selection key controlling movement of the cursor. By rotating the rotation knob 140, the cursor for selecting menus is moved from one menu to another menu. The direction of movement of the cursor is determined by the rotational direction of the rotation knob 140. For selection of a certain menu, the user places the cursor on a desired menu by using the rotation knob 140 and presses the rotation knob 140. Thus, the enter function is performed to confirm the selection of the menu. One button touch is used to select from either the manual focusing function or the menu selecting function, and the rotation knob 140 performs the scrolling function that corresponds to the selected function.

Referring to Figure 5, a scroll key 200 comprises a circuit board 210, the vertical rotation switch 130, the rotation knob 140 for rotating the vertical rotation switch 130, the first tact switch 150 (not shown) pressed by the rotation knob 140, the second tact switch 170 for selecting functions, and a holder button 220 for supporting the rotation knob 140 during rotation for and pressing the second tact switch 170.

The circuit board 210 is an integrated version of the base board 110 and the FPC 120 of the previous embodiment described above. The circuit board 210 comprises a general printed circuit board (PCB) formed from a sturdy material, and a special-functioned circuit formed on the PCB. On the circuit board 210, the vertical rotation switch 130 and the first and the second tact switches 150 and 170 are mounted in-line. The holder button 220, which is an integrated form of the holder 160 and the button 180 of the previous embodiment, comprises a guide part 221 for supporting the rotation knob 140 in both the rotation and the vertical movement, a leg part 222 fixing the holder button 220 to the circuit board 210 so that the guide part 221 is located above the first tact switch 150, and a pressing part 223 formed opposite the guide part 221 to press the second tact switch 170. The leg part 222 has a projection so that the holder button 220 is mounted on the circuit board 210 by being melted. Also, general fastening members, such as bolts, are used to fix the holder button 220 to the circuit board 210. The vertical rotation switch 130, the rotation knob 140 and the first and the second switches 150 and 170 are the same in both structure and operation as in the previous embodiment, and therefore, they will not be described in detail.

Although switches in respectively separate casings have been discussed as examples for the vertical rotation switch 130, the first tact switch 150 and the second tact switch 170, each switch can be located in one casing to implement the scroll key having a function selecting switch according to an embodiment of the present invention.

As will be appreciated from the above description, the rotation knob 140 rotates perpendicularly to the circuit board 210, and the tact switches 150 and 170 for selecting a function are integrally formed with the base board 110 and aligned with the rotation knob 140. Consequently, the scroll key having a function selecting switch can be made smaller. Further, due to the integral structure of the tact switches 150, 170 and the buttons for pressing the tact switches, the portable electronic device is designed with a similar frame and more easily and better assembled.

## Claims

1. A dial type switch assembly (100) comprising wheel means (140), having shaft means (145), and a switch (150), **characterised in that** said switch (150) is located behind one end of the shaft means (145), and said shaft means (145) is deflectable so as to operate the switch (150) when the user presses the wheel means (140) diametrically.

2. A dial type switch assembly (100) according to claim 1, wherein one end of the shaft means (145) is supported at one end and is rotatable about an axis.

3. A dial type switch assembly (100) according to claim 2, comprising a board (120) having a long edge, wherein the long edge of the board (120) is arranged to be substantially in parallel with the axis.

4. A scroll key having a function selecting switch, comprising:
a circuit board having a circuit provided for a predetermined function;
a vertical rotation switch mounted on the circuit board with a rotation axis thereof being substantially parallel with the circuit board;
first and second tact switches mounted on the circuit board in alignment with the rotation axis of the vertical rotation switch;
a rotation knob rotatably disposed between the vertical rotation switch and the first tact switch substantially in perpendicular relation to the circuit board to rotate the vertical rotation switch and press the first tact switch; and
a button mounted on the circuit board to press the second tact switch.

5. The scroll key having a function selecting switch of claim 4, wherein the button comprises:
a guide part at one side fixed on the circuit board to guide the rotation and vertical movement of the rotation knob.

6. The scroll key having a function selecting switch of claim 5, wherein the guide part of the button is fixed by fusing on the circuit board by using a fixing projection formed at a lower part thereof.

7. A scroll key having a function selecting switch, comprising:
a base board;
a flexible printed circuit (FPC) placed on the base board and having a circuit provided for a predetermined function;
a vertical rotation switch mounted on the FPC with a rotation axis thereof being substantially parallel with the base board;
a rotation knob of which one end is mounted on the rotation axis of the vertical rotation switch to rotate the vertical rotation switch, and a rotation shaft that protrudes at the opposite end;
a first tact switch mounted on the FPC to be disposed under the rotation shaft of the rotation knob;
a holder mounted on the FPC to support the rotation of the rotation shaft above the first tact switch and enable the rotation shaft to press the first tact switch; a second tact switch mounted on the FPC to be aligned with the first tact switch; and
a button mounted on the FPC to press the second tact switch.

8. The scroll key having a function selecting switch of claim 7, wherein the button comprises:
a fixing part fixed between the holder and the rotation knob on the FPC; and
a press part that extends from the fixing part to press the second tact switch.

9. The scroll key having a function selecting switch of claim 8, wherein the holder and the fixing part of the button are fixed on the base board in a manner that fixing projections respectively formed at lower parts thereof penetrate the FPC and the base board and are fused.

10. The scroll key having a function selecting switch of claim 4, wherein the vertical rotation switch has a substantially polygonal hole in the center, and the rotation knob has a rotation shaft at one end corresponding to the hole.

11. The scroll key having a function selecting switch of claim 10, wherein the hole of the vertical rotation switch has a substantially hexagonal shape.

12. The scroll key having a function selecting switch of claim 4, wherein the second tact switch is used as the function selecting switch for selecting one from at least two predetermined functions, the vertical rotation switch performs a scroll function as selected by the second tact switch, and the first tact switch performs an enter function for confirming one of menus scrolled by the vertical switch.
